Europäisches Patentamt

European Patent Office

Office européen des brevets

(11) Veröffentlichungsnummer: **0 457 136 A1**

(12) **EUROPÄISCHE PATENTANMELDUNG**

(21) Anmeldenummer: 91107235.3

(51) Int. Cl.5: **C02F 1/28**

(22) Anmeldetag: 03.05.91

(30) Priorität: 15.05.90 DE 4015621
19.12.90 DE 4040735

(43) Veröffentlichungstag der Anmeldung:
**21.11.91 Patentblatt 91/47**

(84) Benannte Vertragsstaaten:
**AT BE DE DK ES FR SE**

(71) Anmelder: **SIEMENS AKTIENGESELLSCHAFT**

Wittelsbacherplatz 2
W-8000 München 2(DE)

(72) Erfinder: **Gabriel, Christian, Dipl.-Ing.**
**Flurstrasse 6**
**W-8521 Möhrendorf(DE)**
Erfinder: **Jakubietz, Gregor, Dipl.-Ing.**
**Zeppellinstrasse 41**
**W-8520 Erlangen(DE)**

(54) **Vorrichtung und Verfahren zum Reinigen einer mit einem Schadstoff verunreinigten Flüssigkeit.**

(57) Die Vorrichtung (1) umfaßt mindestens einen mit einem Adsorptionsmittel (A) befüllbaren Behälter (2). Zur Reinigung einer mit einem Schadstoff beladenen Flüssigkeit (f), bevorzugt noch am Ort eines Störfalls, ist erfindungsgemäß vorgesehen, daß im Bereich des Behälterbodens (2a) eine an eine erste Leitung (3) angeschlossene Verteiler- und/oder Sammeleinrichtung (4) sowohl zum Verteilen der verunreinigten Flüssigkeit (f) im Behälter (2) als auch zum Austragen des mit dem Schadstoff beladenen Adsorptionsmittels (A) aus dem Behälter (2) angeordnet ist. Im oberen Bereich (2b) des Behälters (2) ist eine zweite Leitung (6) zum Abführen der gereinigten Flüssigkeit (r) angeordnet. Zum Einleiten von Spülmittel in den Behälter (2) ist im oberen Bereich (2b) des Behälters (2) eine Spülmittelleitung (6, 9) angeordnet. Das Verfahren bedient sich bevorzugt der Komponenten der vorgenannten Vorrichtung (1). Reinigung und Spülung werden dabei in Gegenrichtung bzw. in Richtung zur Schwerkraft durchgeführt.

FIG 1

Die Erfindung betrifft eine Vorrichtung und ein Verfahren zum Reinigen einer mit einem Schadstoff verunreinigten Flüssigkeit, insbesondere von Abwasser, mit mindestens einem mit einem Adsorptionsmittel befüllbaren Behälter.

Bei einem Störfall beim Betrieb einer Industrieanlage, beispielsweise bei einem Brand einer Chemieanlage, oder beim Transport von gefährlichen Gütern, beispielsweise bei einem Chemietransportunfall, wird das dabei anfallende Abwasser oder das Löschwasser häufig zusammen mit den darin gelösten Schadstoffen direkt in die Kanalisation eingeleitet. Dies kann zu einer erheblichen Störung beim Betrieb einer Kläranlage und zu einer Belastung der Umwelt führen.

Eine die Umwelt weniger belastende Maßnahme besteht darin, das Abwasser oder das Löschwasser mit den darin gelösten Schadstoffen aufzufangen und in Behältern zu sammeln. Das in den Behältern gesammelte Abwasser oder Löschwasser wird anschließend mit einem geeigneten Transportfahrzeug einer Entsorgungseinrichtung zugeführt. Diese Maßnahme bringt es nachteiligerweise mit sich, daß für die bei derartigen Störfällen auftretenden großen Abwassermengen entsprechend große Behälterkapazitäten bereitgestellt werden müssen.

Der Erfindung liegt die Aufgabe zugrunde, eine Vorrichtung und ein Verfahren der eingangs genannten Art anzugeben, die bei einem Störfall mit Anfall von verunreinigter Flüssigkeit mit geringem technischen Aufwand eine schnelle und zuverlässige Reinigung der mit Schadstoffen verunreinigten Flüssigkeit ermöglichen.

Die Erfindung beruht auf der Überlegung, daß diese Aufgabe gelöst werden kann, wenn die Vorrichtung zum Reinigen der Flüssigkeit direkt am Ort des Störfalles einsetzbar ist und das Verfahren vor Ort durchgeführt werden kann.

Die genannte Aufgabe wird erfindungsgemäß gelöst durch eine Vorrichtung

- mit mindestens einem mit einem Adsorptionsmittel befüllbaren Behälter,
- mit einer im Bereich des Behälterbodens an eine erste Leitung angeschlossenen Verteiler- und Sammel-Einrichtung sowohl zum verteilen der verunreinigten Flüssigkeit im Behälter als auch zum Austragen des mit dem Schadstoff beladenen Adsorptionsmittels aus dem Behälter,
- mit einer im oberen Bereich des Behälters angeordneten zweiten Leitung zum Abführen der gereinigten Flüssigkeit und
- mit einer im oberen Bereich des Behälters angeordneten Spülmittelleitung zum Einleiten von Spülmittel in den Behälter.

Zum gleichmäßigen Verteilen der über die erste Leitung in den Behälter einströmenden verunreinigten Flüssigkeit über dessen gesamten Querschnitt ist vorteilhafterweise die Verteiler- und Sammel-Einrichtung trichterförmig ausgebildet; sie weist eine größere und eine kleinere Trichteröffnung auf. Dabei ist die größere Trichteröffnung dem Behälterboden zugewandt. Zur Stabilisierung der trichterförmigen Einrichtung im Behälter kann diese am Behälterboden befestigt sein; sie weist dort zweckmäßigerweise randseitige Öffnungen auf.

Gemäß einer zweckmäßigen Ausgestaltung der erfindungsgemäßen Vorrichtung ist diese so ausgebildet, daß zum Ausspülen des Adsorptionsmittels aus dem Behälter über die im oberen Bereich des Behälters angeordnete zweite Leitung Spülmittel in den Behälter eingeleitet wird. Dadurch kann eine weitere Leitung oder Spülmittelleitung im oberen Bereich des Behälters eingespart werden.

Zum Erhöhen der Spülwirkung kann an den Behälter im Bereich des Behälterbodens zusätzlich eine Zuströmleitung für das Spülmittel angeschlossen sein.

Zum Reinigen der verunreinigten Flüssigkeit am Ort eines Störfalls ist der Behälter vorteilhafterweise mobil. Dazu kann der Behälter auf einem Fahrgestell, insbesondere einem motorisch betriebenen Transportfahrzeug, angeordnet sein.

Zum Ablassen von Restspülwasser aus dem Behälter und/oder zum Ausspülen der trichterförmigen Einrichtung zwecks Vermeidung von Verstopfungen kann am Boden des Behälters eine Abström- und/oder Spülleitung angeschlossen sein. Zum Auffangen des mit dem Restspülwasser mitgerissenen Adsorptionsmittel kann an der Abström- und/oder Spülleitung im Bereich des Behälterbodens vorteilhafterweise ein Sieb vorgesehen sein.

Zum Ausspülen der trichterförmigen Einrichtung sollte vorteilhafterweise die Abström- und/oder Spülleitung innerhalb der größeren Trichteröffnung der trichterförmigen Einrichtung angeordnet sein.

Zum Trennen des Reinigungsvorgangs und des Spülvorgangs voneinander sollte mindestens eine der Leitungen mit einem Absperrventil versehen sein.

Zum Auffangen des Spülmittels und des mit dem Spülmittel aus dem Behälter ausgetragenen Adsorptionsmittels kann die erste Leitung in einen Auffangbehälter führen. Dabei weist der Auffangbehälter zum Trennen des Spülmittels und des Adsorptionsmittels voneinander zweckmäßigerweise ein Sieb auf.

Zur Erzeugung eines erhöhten Spülmitteldrucks zum Austragen des Adsorptionsmittels aus dem Behälter sollte der Auffangbehälter über eine Pumpe mit der Spülmittelleitung und/oder der Zuströmleitung verbunden sein.

Zum Befüllen des Behälters mit Adsorptionsmittel, vorzugsweise mit Aktivkohle, sollte der Behälter im oberen Bereich einen Einfüllstutzen aufweisen.

Bezüglich des Verfahrens wird die gestellte Aufgabe erfindungsgemäß dadurch gelöst,

- daß man die verunreinigte Flüssigkeit in Gegenrichtung zur Schwerkraft durch eine in dem Behälter befindliche Kolonne aus dem Adsorptionsmittel strömen läßt,
- daß man danach in Richtung der Schwerkraft ein flüssiges Spülmittel durch die Kolonne strömen läßt, wodurch das mit dem Schadstoff verunreinigte Adsorptionsmittel aus dem Behälter gespült wird, und
- daß das verunreinigte Adsorptionsmittel in einem Auffangbehälter aufgefangen und dort vom flüssigen Spülmittel getrennt wird.

Gemäß einer Weiterbildung des erfindungsgemäßen Verfahrens wird das Spülmittel aus dem Auffangbehälter in den Behälter zurückgepumpt. Dadurch kann vorteilhafterweise die zum Austragen des Adsorptionsmittels aus dem Behälter notwendige Menge des Spülmittels verhältnismäßig klein gehalten werden.

Die mit der Erfindung erzielten Vorteile bestehen insbesondere darin, daß durch Verwendung einer Adsorptionskolonne in einem mobilen Behälter eine große Menge von mit Schadstoff beladener Flüssigkeit direkt am Ort eines Störfalls gereinigt werden kann. Die gereinigte Flüssigkeit kann dabei anschließend sofort wieder an die Umgebung abgegeben werden. Dadurch ist die einer Entsorgungseinrichtung zuzuführende Substanzmenge auf die Menge des verwendeten Adsorptionsmittels im Behälter beschränkt. Es ist besonders vorteilhaft, die mit Schadstoff(en) verunreinigte Flüssigkeit in Gegenrichtung zur Schwerkraft durch die Adsorptionskolonne zu führen, weil dadurch ein Mitreißen von Schadstoff(en) und/oder von Adsorptionsmittel mit der Flüssigkeit vermieden wird. Beim Spülgang wiederum unterstützt die Schwerkraft das Austragen des gesättigten Adsorptionsmittels aus dem Behälter.

Zur näheren Erläuterung der Erfindung werden anhand einer Zeichnung Ausführungsbeispiele beschrieben. Dabei zeigen:

FIG 1     eine erfindungsgemäße Vorrichtung mit einem Behälter im Längsschnitt im Reinigungsbetrieb,

FIG 2     eine erfindungsgemäße Vorrichtung mit einem Behälter gemäß Figur 1 im Spülbetrieb und

FIG 3     einen Ausschnitt III aus Figur 1 und aus Figur 2 in größerem Maßstab mit einer bevorzugten Verteiler- und Sammeleinrichtung.

Einander entsprechende Teile sind in allen Figuren mit den gleichen Bezugszeichen versehen.

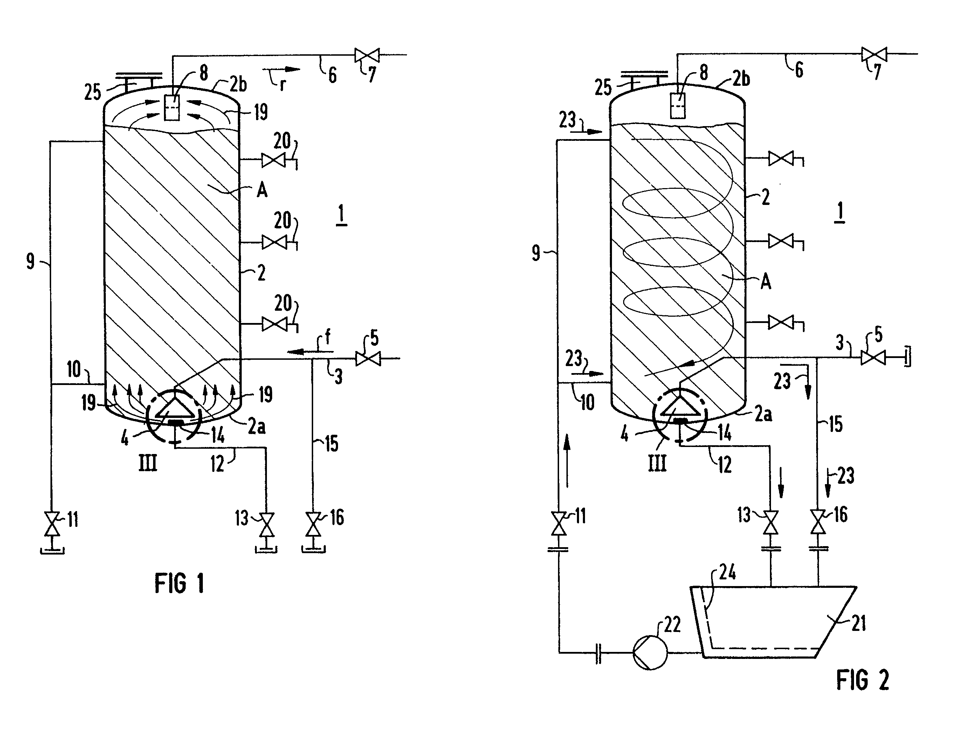

Eine Vorrichtung 1 zum Reinigen einer mit einem Schadstoff verunreinigten Flüssigkeit f umfaßt gemäß Figur 1 einen Behälter 2 mit einer im Bereich des Behälterbodens 2a an eine erste Leitung 3 angeschlossenen Verteiler- und Sammeleinrichtung 4. Die erste Leitung 3 ist mit einem Absperrventil 5 versehen. An den Behälter 2 ist im oberen Bereich 2b eine zweite Leitung 6 zum Abführen der gereinigten Flüssigkeit r angeschlossen, die mit einem Absperrventil 7 versehen ist. Im oberen Bereich 2b des Behälters 2 ist vor der zweiten Leitung 6 ein Sieb 8 angeordnet.

Wie auch in Figur 2 dargestellt, ist an den Behälter 2 im oberen Bereich 2b eine weitere Leitung oder Spülmittelleitung 9 angeschlossen. Von der Leitung 9 zweigt eine Zuströmleitung 10 ab, die im Bereich des Behälterbodens 2a an den Behälter 2 angeschlossen ist. Die Spülmittelleitung 9 ist mit einem Absperrventil 11 versehen.

Am Boden 2a des Behälters 2 ist eine Abström- und/oder Spülleitung 12 angeschlossen, die mit einem Absperrventil 13 versehen ist. Am Ende der Abström- und/oder Spülleitung 12 ist im Bereich des Behälterbodens 2a ein Sieb 14 angeordnet.

An die erste Leitung 3 ist eine Abströmleitung 15 angeschlossen, in die ein Absperrventil 16 geschaltet ist.

Der Behälter 2 ist mit einem Adsorptionsmittel A, vorzugsweise mit Aktivkohle, in Form einer Kolonne gefüllt.

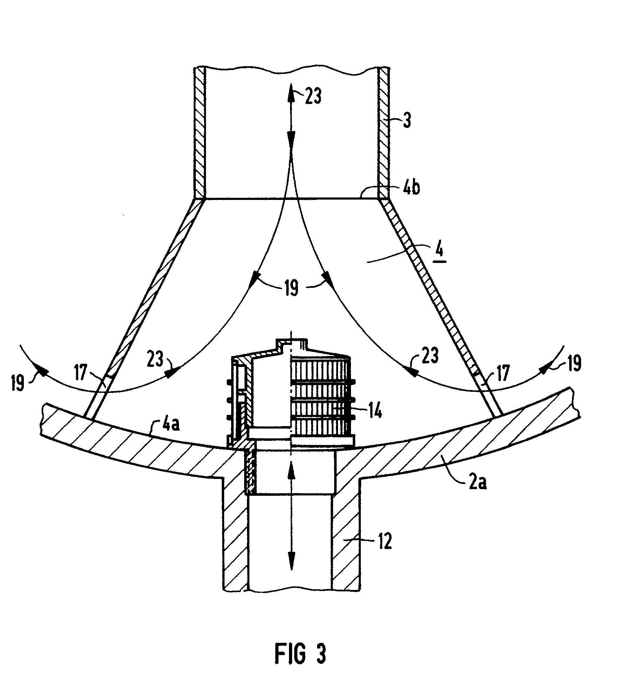

Wie in Figur 3 dargestellt, kann die Verteiler- und Sammeleinrichtung 4 trichterförmig ausgebildet sein. Sie ist mit ihrer größeren Trichteröffnung 4a dem Behälterboden 2a zugewandt, und sie ist mit ihrer kleineren Trichteröffnung 4b an die erste Leitung 3 angeschlossen. Zur Stabilisierung ist die trichterförmige Einrichtung 4 am Behälterboden 3 befestigt. Sie weist im Bereich der größeren Trichteröffnung 4a randseitige Öffnungen 17 auf. Sie kann aber auch mit einem gewissen Abstand zum Behälterboden 2a angeordnet sein. Die Abström- und/oder Spülleitung 12 ist im Bereich der größeren Trichteröffnung 4a angeordnet. Statt einer trichterförmigen Einrichtung 4 kann auch eine spinnenartige Einrichtung verwendet werden.

Der Behälter 2 ist in nicht näher dargestellter Art und Weise auf einem motorisch betriebenen Transportfahrzeug angeordnet. Dabei können auch mehrere, beispielsweise zwei baugleiche Behälter 2 derart zusammengeschaltet sein, daß sie, wie im folgenden näher erläutert, gleichzeitig oder nacheinander betrieben werden können.

Bei einem Störfall, beispielsweise bei einem Brand einer Chemieanlage, wird die mit Schadstoff verunreinigte Flüssigkeit f, beispielsweise das Löschwasser, über die Leitung 3 in den Behälter 2 eingeleitet. Wie durch die Pfeile 19 angedeutet, wird mit Hilfe der trichterförmigen Einrichtung 4 die verunreinigte Flüssigkeit f über den gesamten Querschnitt des Behälters 2 verteilt. Sie strömt, ausgehend vom Behälterboden 2a, in Gegenrichtung zur Schwerkraft durch das Adsorptionsmittel A. Die in der Flüssigkeit f gelösten Schadstoffe werden vom Adsorptionsmittel A adsorbiert, wobei die Schadstoffkonzentration von unten nach oben abnimmt. Die gereinigte Flüssigkeit r wird über die Leitung 6 abgezogen.

Von der gereinigten Flüssigkeit r mitgerissene Bestandteile des Adsorptionsmittels A werden im Sieb 8 aufgefangen.

Zum Kontrollieren des Sättigungsgrades des Adsorptionsmittels A sind an dem Behälter 2 in verschiedenen Ebenen Anschlüsse 20 zur Probenentnahme angeordnet.

Ist der maximale Sättigungsgrad erreicht, wird durch Absperren des Ventils 5 das weitere Einleiten der verunreinigten Flüssigkeit f in den Behälter 2 gestoppt. Eine kontinuierliche Reinigung kann durch Einleiten der verunreinigten Flüssigkeit f nunmehr in einen zweiten baugleichen Behälter 2 erreicht werden.

Zum Ausspülen des gesättigten Adsorptionsmittels A aus dem Behälter 2 werden, wie in Figur 2 gezeigt, die Leitungen 9, 12 und 15 an einen Auffangbehälter 21 angeschlossen. Wie durch die Pfeile 23 angedeutet, wird gereinigtes Spülmittel (z.B. Wasser) aus dem Auffangbehälter 21 mit Hilfe einer Pumpe 22 über die Leitungen 9 und 10 in den Behälter 2 gepumpt. Das Adsorptionsmittel A strömt zusammen mit dem Spülmittel über die Sammeleinrichtung 4 und die Leitung 15 in den Auffangbehälter 21. Zum Abtrennen des mit den Schadstoffen beladenen Adsorptionsmittels A vom Spülmittel ist in dem Auffangbehälter 21 ein Sieb 24 angeordnet. Das verunreinigte Adsorptionsmittel A bleibt also im Auffangbehälter 21 zurück.

Wie in Figur 3 in größerem Maßstab dargestellt, wie auch durch die Pfeile 19 und 23 angedeutet, dient die trichterförmige Einrichtung 4 sowohl zum Verteilen der verunreinigten Flüssigkeit f über den Behälterquerschnitt, als auch zum Sammeln des ausgespülten Adsorptionsmittels A beim Ausspülen des Behälters 2. Durch Öffnen des Absperrventils 13 kann über die Abström- und/oder Spülleitung 12 Restspülmittels aus dem Behälter 2 abgezogen werden. Dabei wird das Adsorptionsmittel A mit dem innerhalb der größeren Trichteröffnung 4a angeordneten Sieb 14 zurickgehalten. Um Verstopfungen zu vermeiden, kann das Sieb 14 über die Spülleitung 12 in Rückwärtsrichtung mit Spülwasser aus dem Auffangbehälter 21 gespült werden.

Zur Behandlung des mit den Schadstoffen beladenen Adsorptionsmittels A kann vorteilhafterweise der noch gefüllte Behälter 2 zu einer Entsorgungseinrichtung transportiert und dort zum Ausspülen mit den Leitungen 9, 12 und 15 an einen bereitgestellten Auffangbehälter 21 angeschlossen werden.

Es ist aber auch möglich, am Ort des Störfalls das in einem ersten Behälter 2 gereinigte Abwasser einem zweiten baugleichen Behälter 2 als Spülmittel zuzuführen. Dabei kann dem zweiten Behälter 2 das Spülmittel über die Leitung 6 zugeführt werden. Dadurch können vorteilhafterweise die Spülleitungen 9 und 10 eingespart werden. Der ausgespülte Behälter 2 kann über einen Einfüllstutzen 25 erneut mit Adsorptionsmittel A befüllt und anschließend wieder zur Reinigung des Abwassers f eingesetzt werden. Durch eine derartige Zusammenschaltung von zwei Behältern 2 wird ein kontinuierlicher Reinigungsbetrieb erreicht.

Um den Reinigungsgrad der gereinigten Flüssigkeit zu erhöhen, können auch zwei oder mehr Behälter 2 hintereinander geschaltet werden. Dabei wird die über die Leitung 6 eines ersten Behälters 2 abströmende Flüssigkeit dem zweiten Behälter über die Leitung 3 zugeführt.

## Patentansprüche

1. Vorrichtung zum Reinigen einer mit einem Schadstoff verunreinigten Flüssigkeit, insbesondere von Abwasser,
   - mit mindestens einem mit einem Adsorptionsmittel (A) befüllbaren Behälter (2),
   - mit einer im Bereich des Behälterbodens (2a) an eine erste Leitung (3) angeschlossenen Verteiler- und Sammeleinrichtung (4) sowohl zum Verteilen der verunreinigten Flüssigkeit im Behälter (2) als auch zum Austragen des mit dem Schadstoff beladenen Adsorptionsmittels (A) aus dem Behälter (2),
   - mit einer im oberen Bereich (2b) des Behälters (2) angeordneten zweiten Leitung (6) zum Abführen der gereinigten Flüssigkeit und
   - mit einer im oberen Bereich (2b) des Behälters (2) angeordneten Spülmittelleitung (6, 9) zum Einleiten von Spülmittel in den Behälter (2) .

2. Vorrichtung nach Anspruch 1,
   **dadurch gekennzeichnet,**
   - daß die Verteiler- und Sammeleinrichtung (4) trichterförmig ausgebildet ist, und eine größere und eine kleinere Trichteröffnung (4a bzw. 4b) aufweist, und
   - daß die größere Trichteröffnung (4a) dem Behälterboden (2a) zugewandt ist.

3. Vorrichtung nach Anspruch 2,
   **dadurch gekennzeichnet,** daß die trichterförmige Einrichtung (4) am Behälterboden (2a) befestigt ist und dort randseitige Öffnungen (17) aufweist.

4. Vorrichtung nach einem der Ansprüche 1 bis 3,
dadurch gekennzeichnet, daß als Spülmittelleitung (9) die zweite Leitung (6) vorgesehen ist.

5. Vorrichtung nach einem der Ansprüche 1 bis 4,
dadurch gekennzeichnet, daß an den Behälter (2) im Bereich des Behälterbodens (2a) zusätzlich eine Zuströmleitung (10) für das Spülmittel angeschlossen ist.

6. Vorrichtung nach einem der Ansprüche 1 bis 5,
dadurch gekennzeichnet, daß der Behälter (2) mobil ist.

7. Vorrichtung nach einem der Ansprüche 1 bis 6,
dadurch gekennzeichnet, daß der Behälter (2) auf einem Fahrgestell, insbesondere einem motorisch betriebenen Transportfahrzeug, angeordnet ist.

8. Vorrichtung nach einem der Ansprüche 1 bis 7,
dadurch gekennzeichnet, daß am Boden (2a) des Behälters (2) eine Abström- und/oder eine Spülleitung (12) angeschlossen ist.

9. Vorrichtung nach einem der Ansprüche 1 bis 8,
dadurch gekennzeichnet, daß an der Abström- und/oder Spülleitung (12) im Bereich des Behälterbodens (2a) ein Sieb (14) vorgesehen ist.

10. Vorrichtung nach einem der Ansprüche 2 bis 9,
dadurch gekennzeichnet, daß die Abström- und/oder Spülleitung (12) innerhalb der größeren Trichteröffnung (4a) der trichterförmigen Einrichtung (4) angeordnet ist.

11. Vorrichtung nach einem der Ansprüche 1 bis 10,
dadurch gekennzeichnet, daß mindestens eine der Leitungen (3, 6, 9, 12, 15) mit einem Absperrventil (5, 7, 11, 13, 16) versehen ist.

12. Vorrichtung nach einem der Ansprüche 1 bis 11,
dadurch gekennzeichnet, daß die erste Leitung (3) in einen Auffangbehälter (21) führt.

13. Vorrichtung nach Anspruch 12,
dadurch gekennzeichnet, daß der Auffangbehälter (21) ein Sieb (24) aufweist.

14. Vorrichtung nach einem der Ansprüche 12 oder 13,
dadurch gekennzeichnet, daß der Auffangbehälter (21) über eine Pumpe (22) mit der Spülmittelleitung (9) und/oder der Zuströmleitung (10) verbunden ist.

15. Vorrichtung nach einem der Ansprüche 1 bis 14,
dadurch gekennzeichnet, daß der Behälter (2) im oberen Bereich (2b) einen Einfüllstutzen (25) zum Einfüllen des Adsorptionsmittels (A) aufweist.

16. Vorrichtung nach einem der Ansprüche 1 bis 15,
dadurch gekennzeichnet, daß das Adsorptionsmittel (A) Aktivkohle ist.

17. Verfahren zum Reinigen einer mit einem Schadstoff verunreinigten Flüssigkeit, insbesondere von Abwasser, mit mindestens einem mit einem Adsorptionsmittel (A) befüllbaren Behälter (2), insbesondere nach einem der Ansprüche 1 bis 16,
dadurch gekennzeichnet,
- daß man die verunreinigte Flüssigkeit in Gegenrichtung zur Schwerkraft durch eine in dem Behälter (2) befindliche Kolonne aus dem Adsorptionsmittel (A) strömen läßt,
- daß man danach in Richtung der Schwerkraft ein flüssiges Spülmittel durch die Kolonne strömen läßt, wodurch das mit dam Schadstoff verunreinigte Adsorptionsmittel (A) aus dem Behälter (2) ausgespült wird, und
- daß das verunreinigte Adsorptionsmittel (A) in einem Auffangbehälter (21) aufgefangen und dort vom flüssigen Spülmittel getrennt wird.

18. Verfahren nach Anspruch 17,
dadurch gekennzeichnet, daß das Spülmittel aus dem Auffangbehälter (21) in den Behälter (2) zurückgepumpt wird.

FIG 1

FIG 2

FIG 3

| | EINSCHLÄGIGE DOKUMENTE | | EP 91107235.3 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
| X | <u>DE - A1 - 3 800 613</u><br>(IWTS CONSULTING ENGINEERS)<br>* Zusammenfassung; Fig. 1;<br>Spalte 3, Zeilen 5-41 *<br>-- | 1,17 | C 02 F 1/28 |
| X | <u>EP - A2 - 0 333 257</u><br>(METALLGESELLSCHAFT AG)<br>* Spalte 2, Zeilen 30-58;<br>Spalte 3, Zeilen 48-50;<br>Ansprüche *<br>---- | 1,16,<br>17 | |
| | | | **RECHERCHIERTE SACHGEBIETE (Int. Cl.⁵)** |
| | | | C 02 F |

Der vorliegende Recherchenbericht wurde für alle Patentansprüche erstellt.

| Recherchenort<br>WIEN | Abschlußdatum der Recherche<br>12-08-1991 | Prüfer<br>WILFLINGER |
|---|---|---|